# FASCICULE DE BREVET EUROPEEN

(11) **EP 1 244 078 B1**
(45) Date de publication et mention de la délivrance du brevet: **04.07.2007**
(21) Numéro de dépôt: 01870058.3
(22) Date de dépôt: 23.03.2001
(51) Int. Cl.: G07F 7/10

(54) **Procédé de mise à jour d'un document électronique**
Verfahren zur Aktualisierung eines elektronischen Dokuments
Method of updating an electronic document

(43) Date de publication de la demande: 25.09.2002
(73) Titulaire: PROTON WORLD INTERNATIONAL en abrégé PWI, 1130 Bruxelles (Haren) (BE)
(72) Inventeur: Ingels, Didier, 1367 Grand-Rosière (BE); Restiau, Guy, 1330 Rixensart (BE)
(74) Mandataire: Schmitz, Yvon

(56) Documents cités:
- EP-A- 0 886 240
- WO-A-00/17794
- WO-A-01/01338
- FR-A- 2 730 833

## Description

La présente invention concerne un procédé de mise à jour d'une partie déterminée d'un document électronique de départ, stocké dans un fichier préalablement formaté d'une mémoire, notamment dans une carte à puce destinée à des transactions monétaires en association avec un terminal correspondant.

Présentement, afin de faire une telle mise à jour dans la mémoire de la carte à puce, le document doit être lu dans son entièreté par le terminal dans ladite mémoire et être traité dans le terminal, dans une mémoire de celui-ci, et lorsque la mise à jour est terminée, tout le document mis à jour doit être renvoyé par le terminal à la carte pour être réécrit dans la mémoire de celle-ci. Cette procédure est longue et cela est déjà très gênant en soi pour les utilisateurs et, du fait de la quantité de données que peut comporter tout le document et qu'il faut ainsi transmettre deux fois, et donc du temps relativement long de la transmission, le risque d'un problème de transmission et donc d'un non aboutissement de l'opération effectuée à l'aide de la carte et du terminal est accru d'autant.

Cet inconvénient de l'art antérieur existe également dans le système décrit dans la publication européenne EP 0 886 240, lequel implique l'utilisation d'une mémoire auxiliaire lors de la transmission de données de l'ordinateur central vers la carte à puce. Les données transmises sont d'abord stockées dans cette mémoire auxiliaire avant de remplacer les données dans la mémoire principale de la carte, afin d'éviter une perte des données de départ en cas d'interruption de la procédure de transmission entre l'ordinateur central et la carte à puce. Ce système ne remédie cependant pas aux durées excessives que nécessite la transmission de la totalité de données concernées.

L'invention a pour but de remédier à ce problème et de procurer un procédé par lequel on définit d'abord de façon claire et utilisable par une carte à puce la partie déterminée à mettre à jour, et par lequel la mise à jour est effectuée dans la carte elle-même afin de limiter au minimum la quantité de données à transmettre à la carte et cela dans le seul sens de transmission du terminal vers la carte.

A cet effet, suivant l'invention, le procédé comporte : (a) une détermination d'un début du document électronique et d'un début de la partie déterminée, (b) une mesure d'un écart entre le début du document électronique et le début de la partie déterminée, (c) une détermination d'une longueur de la partie déterminée à mettre à jour, (d) une mise en liaison de communication du terminal et de la carte à puce, (e) une transmission par le terminal à la carte à puce de la mesure de l'écart, de la longueur déterminée et de données de mise à jour de ladite partie du document, (f) par la transmission, une lecture par la carte elle-même, dans son fichier, du document à mettre à jour, pour l'écrire dans une mémoire tampon que la carte comporte, (g) dans la mémoire tampon, une détermination de la partie à mettre à jour, au moyen de ladite mesure de l'écart et de la longueur déterminée, et une mise à jour de cette partie au moyen des données de mise à jour, et (h) une lecture, dans la mémoire tampon, du document mis à jour pour l'écrire dans le fichier soit à la place du document de départ soit en plus de celui-ci.

D'autres détails et particularités de l'invention ressortiront des revendications secondaires et de la description suivante qui illustre, à titre d'exemple non limitatif, le procédé suivant l'invention.

Dans le cas d'exemple d'une carte à puce destinée à des transactions monétaires en association avec un terminal correspondant, la carte peut comporter, stocké dans un fichier préalablement formaté d'une mémoire, un document électronique de départ dont seulement une partie déterminée doit être mise à jour. Le document peut consister entre autres en un ticket de transport mémorisé dans la carte sous une forme d'un ticket électronique latent qu'il faut particulariser à l'aide du terminal au moment de l'achat d'une autorisation d'utiliser le ticket.

Lors d'une mise en oeuvre de l'invention, on commence essentiellement par déterminer un début du document électronique et un début de ladite partie déterminée, par faire une mesure d'un écart entre le début du document électronique et le début de la partie déterminée, et par déterminer une longueur de ladite partie déterminée à mettre à jour.

Pour l'acquisition d'un document électronique, lors d'une mise en liaison de communication du terminal et de la carte à puce, on organise une transmission, par le terminal à la carte à puce, d'au moins des données de mise à jour de ladite partie déterminée. A la suite de cette transmission, la carte elle-même effectue dans son fichier une lecture du document à mettre à jour, pour l'écrire dans une mémoire tampon qu'elle comporte et qui peut être une section réservée de sa mémoire.

La carte à puce est agencée pour trouver dans la mémoire tampon la partie à mettre à jour du document, au moyen de ladite mesure de l'écart et de la longueur déterminée transmises, et pour mettre à jour cette partie au moyen des données de mise à jour transmises. Ensuite, la carte lit dans sa mémoire tampon le document mis à jour et l'écrit dans le fichier de départ, soit à la place du document de départ soit en plus de celui-ci.

En tant que document de départ, il peut s'agir d'un document précédemment mis à jour.

Il doit être entendu que l'invention n'est nullement limitée aux formes de réalisation décrites et que bien des modifications peuvent être apportées à ces dernières sans sortir du cadre des revendications.

On peut prévoir de plus une mémorisation d'un historique des mises à jour, notamment sous la forme d'une mémorisation soit du document mis à jour soit uniquement de la partie déterminée mise à jour.

Dans un cas d'espèce, lors de la transmission entre carte et terminal, la mesure de l'écart et/ou la longueur déterminée sont également communiquées à la carte. Dans un autre cas d'espèce, ces mesure et longueur peuvent être enregistrées d'origine dans la carte pour encore raccourcir le temps de transmission et n'être transmises qu'en cas de changement apporté ou à apporter ultérieurement au document électronique. Une manière d'enregistrer ces mesure d'écart et longueur dans la carte peut être l'organisation, dans la mémoire tampon, d'une fenêtre d'accès par laquelle les données de mise à jour sont amenés directement au bon endroit dans le document.

## Revendications

1. Procédé de mise à jour d'une partie déterminée d'un document électronique de départ, stocké dans un fichier préalablement formaté d'une mémoire de carte à puce destinée à des transactions monétaires en association avec un terminal correspondant,
le procédé étant ***caractérisé en ce qu*'**il comporte :
- une détermination d'un début du document électronique et d'un début de la partie déterminée,
- une mesure d'un écart entre le début du document électronique et le début de la partie déterminée,
- une détermination d'une longueur de la partie déterminée à mettre à jour,
- une mise en liaison de communication du terminal et de la carte à puce,
- une transmission par le terminal à la carte à puce au moins de données de mise à jour de ladite partie du document,
- à la suite de la transmission, une lecture par la carte elle-même, dans son fichier, du document à mettre à jour, pour l'écrire dans une mémoire tampon qu'elle comporte,
- dans la mémoire tampon, une détermination de la partie à mettre à jour, au moyen de ladite mesure de l'écart et de la longueur déterminée, et une mise à jour de cette partie au moyen des données de mise à jour transmises, et
- une lecture, dans la mémoire tampon, du document mis à jour et son écriture dans le fichier de la carte soit à la place du document de départ soit en plus de celui-ci.

2. Procédé suivant la revendication 1, **caractérisé en ce qu'**il comporte en outre une utilisation, en tant que document de départ, d'un document précédemment mis à jour.

3. Procédé suivant l'une ou l'autre des revendications 1 et 2, **caractérisé en ce qu'**il comporte une mémorisation d'un historique des mises à jour, notamment soit sous la forme du document mis à jour soit sous la forme de la partie déterminée mise à jour.

4. Procédé suivant l'une quelconque des revendications 1 à 3, **caractérisé en ce que**, lors de la transmission, la mesure de l'écart et/ou la longueur déterminée sont également communiquées à la carte.

## Claims

1. Method of updating a given part of an initial electronic document, stored in a previously formatted file of a chip-card memory intended for monetary transactions in association with a corresponding terminal,
the method being **characterised in that** it comprises:
- a determination of a start of the electronic document and a start of the given part,
- a measurement of a difference between the start of the electronic document and the start of the given part,
- a determination of a length of the given part to be used,
- putting the terminal and chip card in communication connection,
- a transmission by the terminal to the chip card at least of data updating the said part of the document,
- following the transmission, a reading by the card itself, in its file, of the document to be updated, in order to write it in a buffer that it has,
- in the buffer, a determination of the part to be updated, by means of the said measurement of the difference and the given length, and an updating of this part by means of the updating data transmitted, and
- a reading, in the buffer, of the updated document and its writing in the file of the card, either in place of the initial document or in addition to it.

2. Method according to claim 1, **characterised in that** it also comprises a use, as the initial document, of a document previously updated.

3. Method according to one or other of claims 1 and 2, **characterised in that** it comprises a storage of a history of the updates, in particular either in the form of the updated document or in the form of the updated given part.

4. Method according to any one of claims 1 to 3, **characterised in that**, during transmission, the measurement of the difference and/or the given length are also communicated to the card.

## Patentansprüche

1. Verfahren zum Aktualisieren eines bestimmten Teils eines elektronischen Ausgangsdokuments, das in einer zuvor formatierten Datei eines Chipkartenspeichers gespeichert ist, die für Währungstransaktionen in Zusammenhang mit einem entsprechenden Terminal bestimmt ist,
Verfahren **dadurch gekennzeichnet, dass** es Folgendes umfasst
- ein Bestimmen eines Anfangs des elektronischen Dokuments und eines Anfangs des bestimmten Teils,
- ein Messen eines Abstands zwischen dem Anfang des elektronischen Dokuments und dem Anfang des bestimmten Teils,
- ein Bestimmen einer Länge des bestimmten Teils, der zu aktualisieren ist,
- ein Herstellen der Kommunikationsverbindung des Terminals und der Chipkarte,
- ein Übertragen mindestens von Aktualisierungsdaten des Teils des Dokuments durch das Terminal zu der Chipkarte,
- im Anschluss an die Übertragung ein Lesen des zu aktualisierenden Dokuments durch die Karte selbst in ihrer Datei, um es in einen Pufferspeicher, den sie enthält, zu schreiben,
- in dem Pufferspeicher ein Bestimmen des zu aktualisierenden Teils mittels der Messung des Abstands und der bestimmten Länge und ein Aktualisieren dieses Teils mittels der übertragenen Aktualisierungsdaten, und
- ein Lesen in dem Pufferspeicher des aktualisierten Dokuments und sein Schreiben in die Datei der Karte entweder an der Stelle des Ausgangsdokuments oder zusätzlich zu diesem.

2. Verfahren nach Anspruch 1, **dadurch gekennzeichnet, dass** es ferner einen Gebrauch eines zuvor aktualisierten Dokuments als Ausgangsdokument aufweist.

3. Verfahren nach dem einen oder dem anderen der Ansprüche 1 und 2, **dadurch gekennzeichnet, dass** es ein Speichern einer Historie der Aktualisierungen aufweist, insbesondere entweder in der Form des aktualisierten Dokuments oder in der Form des bestimmten aktualisierten Teils.

4. Verfahren nach einem der Ansprüche 1 bis 3, **dadurch gekennzeichnet, dass** die Messung des Abstands und/oder der bestimmten Länge bei der Übertragung der Karte ebenfalls kommuniziert wird.
